(19) Europäisches Patentamt
European Patent Office
Office européen des brevets

(11) **EP 4 253 329 A1**

(12) **EUROPEAN PATENT APPLICATION**

(43) Date of publication:
**04.10.2023 Bulletin 2023/40**

(21) Application number: **22305417.2**

(22) Date of filing: **31.03.2022**

(51) International Patent Classification (IPC):
*C01G 53/00* $^{(2006.01)}$    *H01M 4/505* $^{(2010.01)}$

(52) Cooperative Patent Classification (CPC):
**C01G 53/50; H01M 4/131; H01M 4/485;**
**H01M 4/505; H01M 4/525; H01M 10/052;**
**H01M 10/0525;** C01P 2002/72; C01P 2002/76;
C01P 2002/77; C01P 2004/03; C01P 2004/04;
C01P 2006/40; H01M 2004/028

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(71) Applicants:
• **TOYOTA JIDOSHA KABUSHIKI KAISHA**
**Toyota-shi, Aichi-ken, 471-8571 (JP)**
• **Centre national de la recherche scientifique**
**75016 Paris (FR)**

(72) Inventors:
• **CASTRO, Laurent**
**1140 BRUSSELS (BE)**

• **SAIBI, Valentin**
**33608 PESSAC CEDEX (FR)**
• **GUIGNARD, Marie**
**33608 PESSAC CEDEX (FR)**
• **DELMAS, Claude-Henri**
**33608 PESSAC CEDEX (FR)**

(74) Representative: **Cabinet Beau de Loménie**
**158, rue de l'Université**
**75340 Paris Cedex 07 (FR)**

Remarks:
Amended claims in accordance with Rule 137(2)
EPC.

(54) **NEW LI-RICH LAYERED POSITIVE ELECTRODE MATERIAL AND ITS SYNTHESIS**

(57)     The present invention relates to a positive electrode active material with O6-type structure having the following formula (1):

$$Li_x [A_z B_w (Li_{1/6} Ni_{1/6} Mn_{4/6})_{1-z-w}] O_2 \qquad (1)$$

wherein
$1 \geq x > 0$, preferably $1 > x > 0.5$;
$z < 0.005$;
when present, A is at least one element chosen from the group consisting of: Mg, Ca, Sr, Sc, Y, La, Ti, Zr, Hf, V, Nb, Ta, Cr, Mo, W, Mn, Fe, Co, Zn and Al;
$w < 0.05$; and
when present, B is at least one element chosen from the group consisting of: Mg, Ca, Sr, Sc, Y, La, Ti, Zr, Hf, V, Nb, Ta, Cr, Mo, W, Mn, Fe, Zn, and Al.
    In addition, the present invention relates to a method for preparing the positive electrode active material, a positive electrode containing the positive electrode active material, and a lithium ion secondary battery or all-solid-state secondary lithium battery containing such a positive electrode.

EP 4 253 329 A1

**Figure 2a**

## Description

<u>Field of the Invention</u>

The present invention lies in the field of positive electrode materials for secondary batteries.

<u>Background Art</u>

PL1 discloses a cathode active material for a positive electrode for a lithium ion secondary battery, comprising a lithium-containing composite oxide represented by $a$Li(Li$_{1/3}$Mn$_{2/3}$)O$_2$·(1-$a$)LiMO$_2$, wherein M is Ni, Co and/or Mn, and $0 < a \leq 0.22$ or $0.64 \leq a < 1$). The X-ray diffraction pattern of the lithium-containing composite oxide corresponds to an O3 type structure.

PL2 discloses a positive electrode material for secondary batteries, the material including a Li-rich transition metal oxide having a lithium-to-oxygen atomic ratio: Li/O of 0.8 or more, and a dicarboxylic acid and/or an anhydride of the dicarboxylic acid. The Li-rich transition metal oxide is in particular of formula Li$_{x1}$M$^1$A$^1_2$, where $1.5 \leq x1 \leq 2.3$, and belonging to a space group Immm, M$^1$ including at least one selected from the group consisting of Ni, Co, Mn, Cu, and Fe, A$^1$ including at least oxygen, A$^1$ having an oxygen content of 85 atom % or more. The space group of the positive electrode material reported here is Immm (71), an orthorhombic one.

PL3 discloses a lithium-containing compound oxide represented by Li$_x$Ni$_a$CO$_b$Mn$_c$M$_d$O$_y$ (x: 1.1 to 1.7, a: 0.15 to 0.5, b: 0 to 0.33, c: 0.33 to 0.85, M: other metal element, d: 0 to 0.05, a + b + c + d = 1, and y: number of moles of O required to satisfy the valences the metal elements). The crystal structure of the compound oxide corresponds to an O3 type structure.

NPL 1 describes layered T2-, O6-, O2-, and P2-Type A$_{2/3}$[M'$^{2+}_{1/3}$M$^{4+}_{2/3}$]O$_2$ bronzes, where A = Li, Na; M' = Ni, Mg; M = Mn, Ti.

PL4 discloses a cobalt-containing lithium metal oxide powder for use as a cathode material in a rechargeable battery, consisting of a core material and a surface layer, the core having a layered crystal structure consisting of the elements Li, a metal M and oxygen, wherein the Li content is stoichiometrically controlled, wherein the metal M has the formula M=Co$_{1-a}$M'$_a$, with $0 \leq a \leq 0.05$, wherein M' is either one or more metals of the group consisting of Al, Ga and B; and the surface layer consisting of a mixture of the elements of the core material and inorganic N-based oxides, wherein N is either one or more metals of the group consisting of Mg, Ti, Fe, Cu, Ca, Ba, Y, Sn, Sb, Na, Zn, Zr and Si.

PL 5 discloses a positive electrode active material having a layered structure and comprising a lithium-containing transition metal oxide in which a main arrangement is represented by a O2 structure, with formula Li$_x$ [Li$_\alpha$ (Mn$_a$CO$_b$M$_c$)$_{i-\alpha}$] O$_2$, wherein $0.5 < x < 1.1$, $0.1 < \alpha < 0.33$, $0.17 < a < 0.93$, $0.03 < b < 0.50$, and $0.04 < c < 0.33$, the element M being selected from the group consisting of Ni, Mg, Ti, Fe, Sn, Zr, Nb, Mo, W, and Bi.

PL 6 discloses a layered crystalline lithium (Li)-containing transition metal composite oxide that contains sodium Na, represented by the general formula Li$_x$Na$_a$[Li$_y$M$_{1-y}$]O$_{2-c+\alpha}$I$_{2c}$, where M contains at least one of Ni, Co, and Mn, $0.67 < x < 1.1$, $0 < y < 0.33$, $0.0001 \leq a \leq 0.1$, $-0.1 \leq \alpha \leq 0.1$, and c is an iodine content (mol/g)/(mol/g) of the positive-electrode active material)/2, where 0.4 μmol/g < the iodine content < 25 μmol/g, and the I is contained within the layered structure of the Li-containing transition metal composite oxide.

PL 7 discloses a positive electrode active material for a secondary battery containing a first and a second composite oxide component. The first composite oxide component is of formula Li$_\alpha$[Li$_x$Mn$_y$Co$_z$Me$_{(1-x-y-z)}$]O$_2$, wherein Me is at least one selected from among Ni, Fe, Ti, Bi, Nb, W, Mo, and Ta, $0.5 < \alpha < 0.85$, $0.05 < x < 0.2$, $0.4 < y < 0.75$, and $0 < z < 0.25$, and having at least one crystal structure selected from among O2, T2, and O6 structures. The second composite oxide component is of formula LiaMObAc wherein M is at least one selected from among Ni, Co, Mn, Fe, Cu, Ti, Nb, Al, Ga, Bi, Zr, Ce, Y, W, Ta, Sn, Ca, Ba, and Na, A is at least one selected from among F, Cl, and S, $1.3 < a < 7$, $2 \leq b < 5$, and $0 \leq c \leq 0.3$.

NP2 discloses a synthesis of Li$_x$Mo$_2$O$_4$ via ion exchange of Na$^+$ for Li$^+$ in Na$_x$Mo$_2$O$_4$.

[Patent Literature]

PL 1 : US 11038167 B2
PL 2: US 2021/0288320 A1
PL 3: JP 6 316 687 B2
PL 4: EP 2 720 981 B1
PL 5: US 2016/0056460 A1
PL 6: US 9 831 489 B2

PL 7: WO 2020/218474 A1

[Non-Patent Literature]

NPL 1: Paulsen et al., Chem. Mater. 2000, 12, 2257-2267
NP2 : Tarascon, J. Electrochem. Soc., Vol. 134, No. 6 (1987), 1345-1351

Summary of the Invention

Among goals sought after for positive electrode materials for lithium ion secondary battery, the following may notably be cited: high capacity, avoidance of capacity degradation through ageing, and reducing cost and ensuring continuity of manufacture by avoiding the need to use metals in limited supply, notably cobalt (Co), a limited mining resource.

In this context, the present invention provides a positive electrode active material with O6-type structure having the following formula (1):

$$Li_x [A_z B_w (Li_{1/6} Ni_{1/6} Mn_{4/6})_{1-z-w}] O_2 \qquad (1)$$

wherein

$1 \geq x > 0$, preferably $1 > x > 0.5$;
$z < 0.005$;
when present, A is at least one element chosen from the group consisting of: Mg, Ca, Sr, Sc, Y, La, Ti, Zr, Hf, V, Nb, Ta, Cr, Mo, W, Mn, Fe, Co, Zn and Al; $w < 0.05$; and
when present, B is at least one element chosen from the group consisting of: Mg, Ca, Sr, Sc, Y, La, Ti, Zr, Hf, V, Nb, Ta, Cr, Mo, W, Mn, Fe, Zn, and Al.

According to the present invention, cobalt (Co) may be present, in the positive electrode active material with O6-type structure of the invention, in a small quantity, according to which $z < 0.005$ in the above formula.

In a preferred embodiment, the present invention provides a positive electrode active material with O6-type structure having the following formula (1):

$$Li_x [Co_z B_w (Li_{1/6} Ni_{1/6} Mn_{4/6})_{1-z-w}] O_2 \qquad (1)$$

wherein

$1 \geq x > 0$, preferably $1 > x > 0.5$;
$z < 0.005$;
$w < 0.05$; and
when present, B is at least one element chosen from the group consisting of: Mg, Ca, Sr, Sc, Y, La, Ti, Zr, Hf, V, Nb, Ta, Cr, Mo, W, Mn, Fe, Zn, and Al.

In preferred embodiments, cobalt (Co) is substantially or fully absent from the positive electrode active material with O6-type structure of the invention, whilst metal elements in the "B" class may be present in higher amounts, corresponding to $w < 0.05$ in the formula above.

In a preferred embodiment, no element A and/or B is present, and so $z = 0$ and/or $w = 0$.

In a preferred positive electrode active material according to the present invention, the material shows the monoclinic C2/m (12) space group, with the following cell parameters :

$$a = 4.93 \text{ Å}, b = 8.52 \text{ Å}, c = 9.81 \text{ Å}, \beta = 100.2°.$$

In another aspect, the present invention provides a method of preparation of a lithium-rich mixed oxide positive electrode active material comprising at least the following steps:

(1) mixing a combination of oxygen-containing anion compounds of nickel, manganese, sodium and lithium, in a heating process in order to prepare a mixed oxide of sodium, lithium, nickel and manganese;

(2) carrying out Na-Li ion exchange through application of a further lithium source to the mixed oxide of sodium, lithium, nickel and manganese prepared in step (1).

In preferred method embodiments, the oxygen-containing anion compounds of nickel, manganese, sodium and lithium comprise oxides, hydroxides and/or carbonates. In particularly preferred method embodiments, the sources of oxygen-containing anion compounds of nickel and/or manganese are oxides, and/or the sources of oxygen-containing anion compounds of sodium and lithium are carbonates and/or hydroxides.

According to particularly preferred conditions for the method of preparation of a positive electrode active material in the present invention, there is:

in step (1), mixing a combination of nickel oxide NiO and manganese oxide $MnO_2$ with sodium carbonate $Na_2CO_3$ and lithium carbonate $Li_2CO_3$ and heating at a temperature of 700°C to 1000°C, preferably 800°C to 900°C, for between 10 hours and 10 days, in order to prepare a mixed oxide of sodium, lithium, nickel and manganese;

in step (2), combining the mixed oxide of sodium, lithium, nickel and manganese prepared in step (1) with lithium chloride (LiCl) powder, grinding, forming a pellet and heating under vacuum at a temperature of at least 200°C and at most 400°C for at least 2 hours and at most 15 hours, in order to carry out solid state ionic Na-Li exchange and prepare a lithium-rich mixed oxide in the presence of lithium chloride and sodium chloride.

In preferred methods of preparation of a positive electrode active material according in the present invention, the steps further comprise:

a step (3) of treating the lithium-rich mixed oxide in the presence of lithium chloride and sodium chloride obtained in step (2) with a solvent to remove remaining lithium chloride and sodium chloride salts, in order to obtain a lithium-rich mixed oxide positive electrode active material.

In preferred methods of preparation of a positive electrode active material according in the present invention, a combination of nickel oxide NiO and manganese oxide $MnO_2$ is used in step (1) and is prepared by:

a prior step (0) of preparing a mixture of nickel oxide NiO and manganese oxide $MnO_2$ by heating of a mixture of nickel and manganese nitrates at a temperature of 350°C to 550°C, preferably 400°C to 500°C.

The method of the present invention allows the positive electrode active material according to the present invention to be obtained.

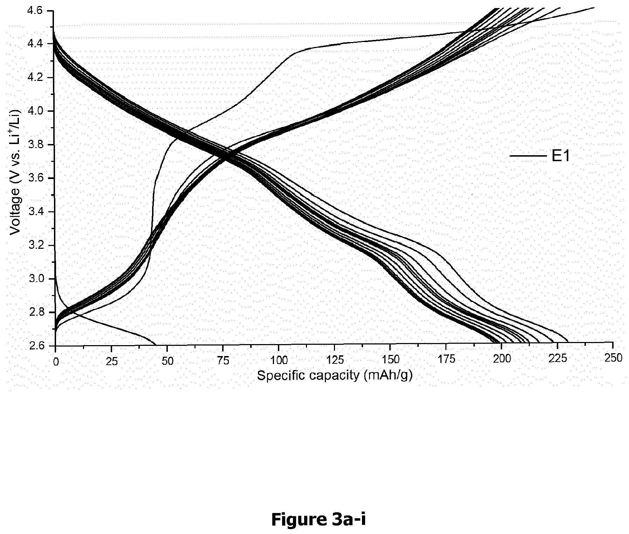

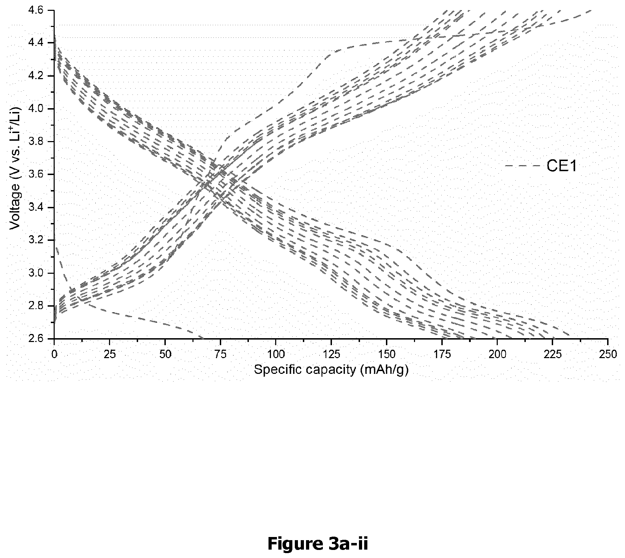

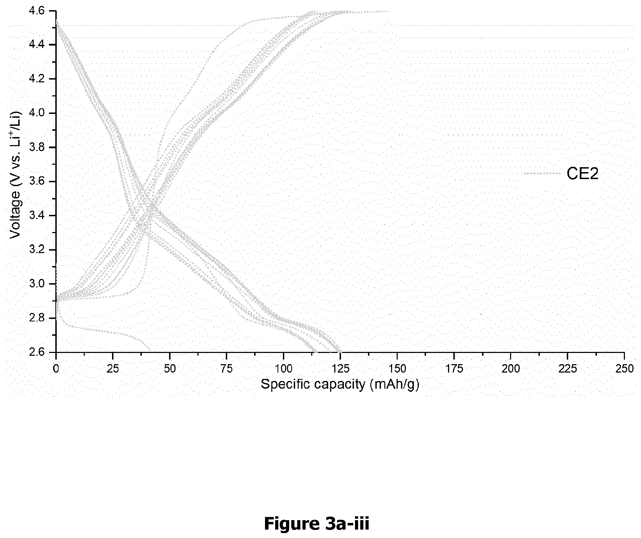

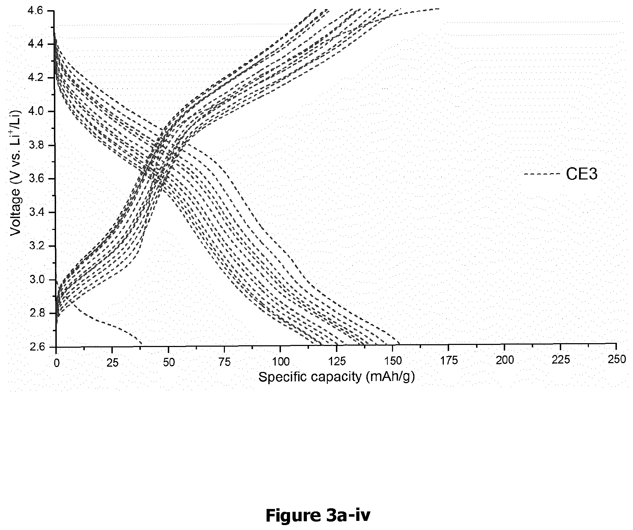

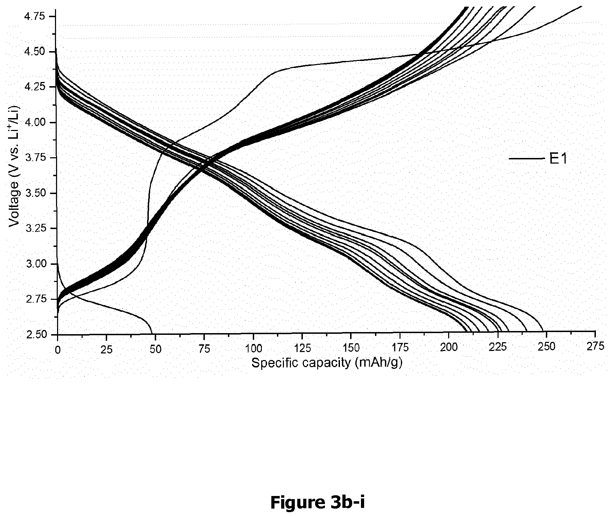

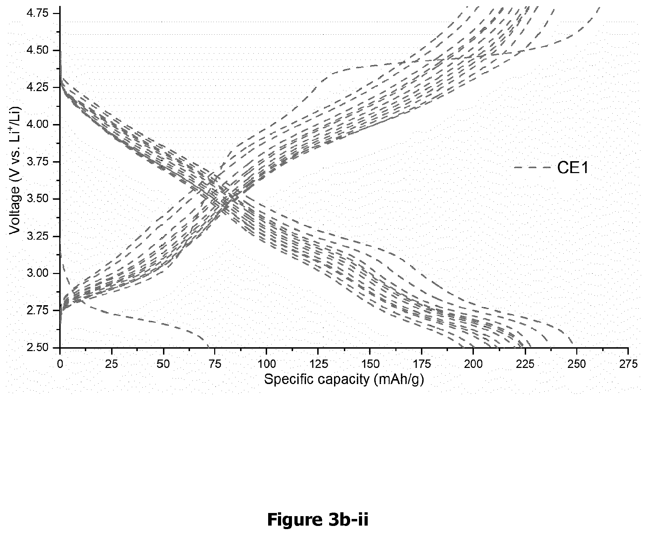

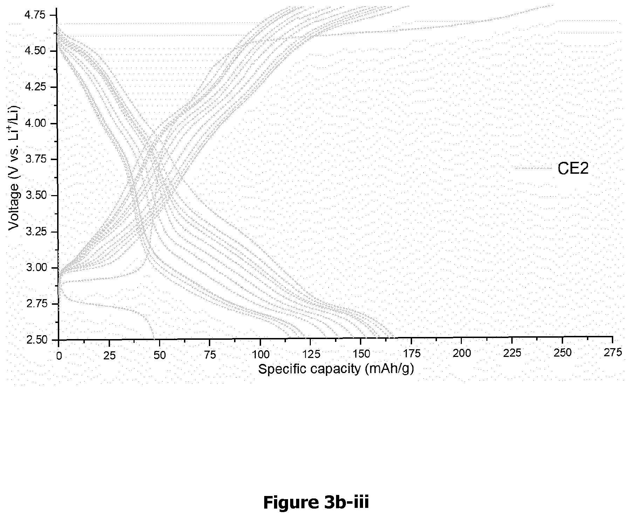

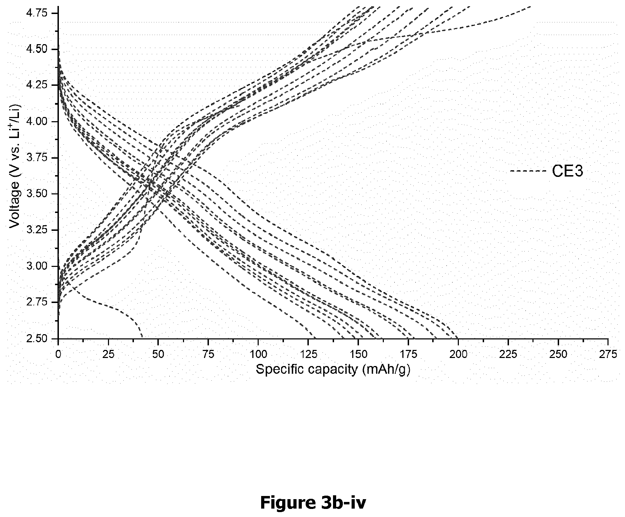

It has been observed by the present inventors that the O6 structure type layered active materials of the present invention provide improved capacity with respect to O3 type ones, as illustrated by the results shown in Figures 3a & 3b. Li-rich O6 layered active materials of the present invention may also avoid irreversible formation of spinel structure, an ageing mechanism, and do not require cobalt (Co), a limited mining resource.

Brief Description of the Figures

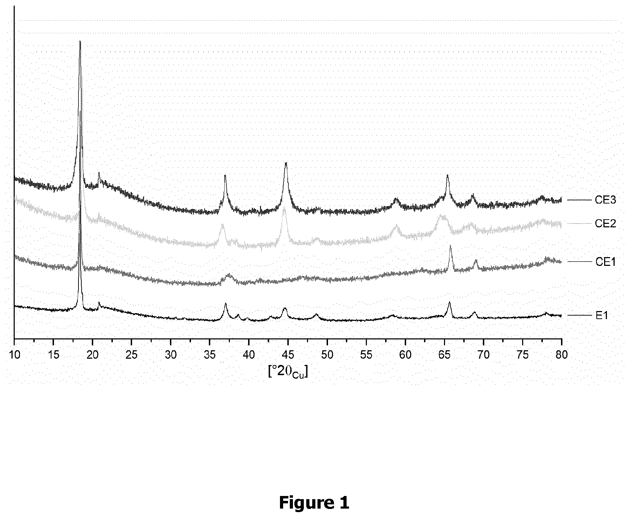

Figure 1 shows X-ray diffraction (XRD) patterns using a Cu source of materials obtained according to Example 1 and Comparative Examples 1 to 3 (E1, CE1, CE2 and CE3).

Figure 2-a shows experimental XRD patterns obtained using Synchrotron Beamline of the E1 material and its associated simulated faulted O6 type structure XRD pattern.

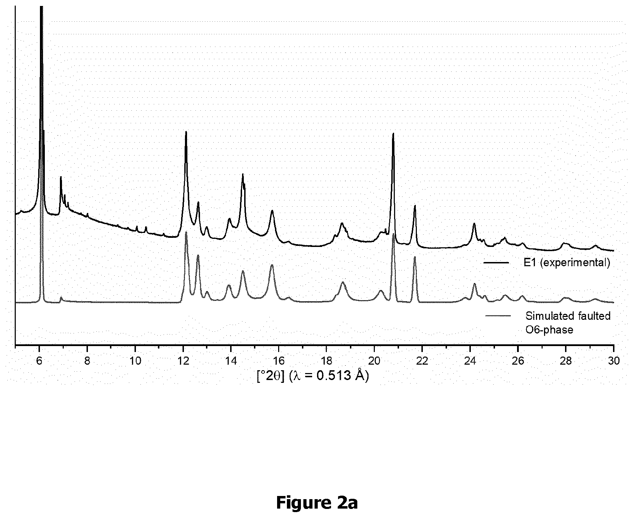

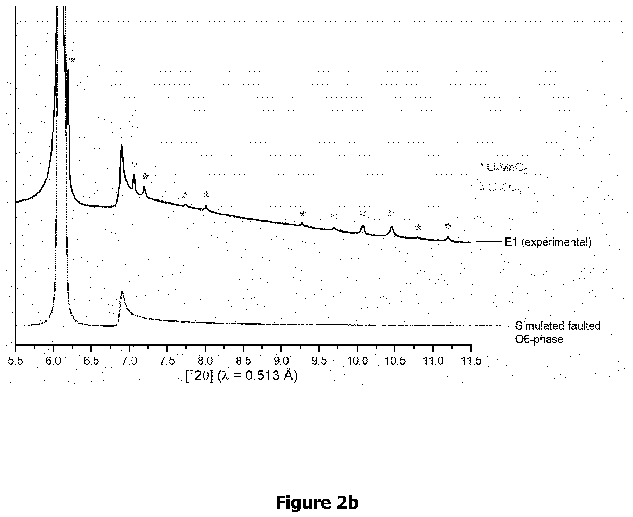

Figure 2-b shows experimental XRD patterns obtained using Synchrotron Beamline (with identified impurities $Li_2CO_3$ and $Li_2MnO_3$) of the E1 material.

Figures 3a-i to 3a-iv show the first cycles obtained with E1, CE1, CE2 and CE3 materials between 2.6 V & 4.6 V (12 cycles), and Figures 3b-i to 3b-iv between 2.5 V & 4.8 V (12 cycles).

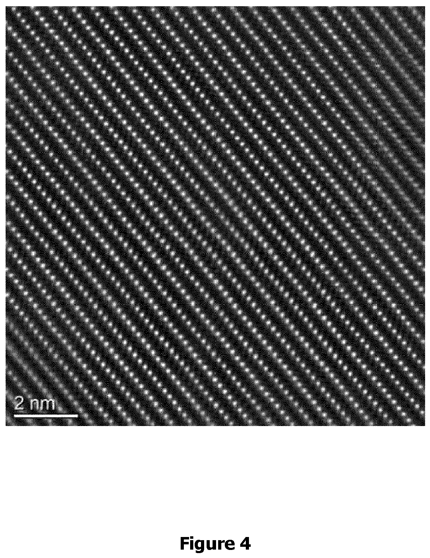

Figure 4 shows a transition electron microscope (TEM) image of the O6 phase as obtained for Example E1.

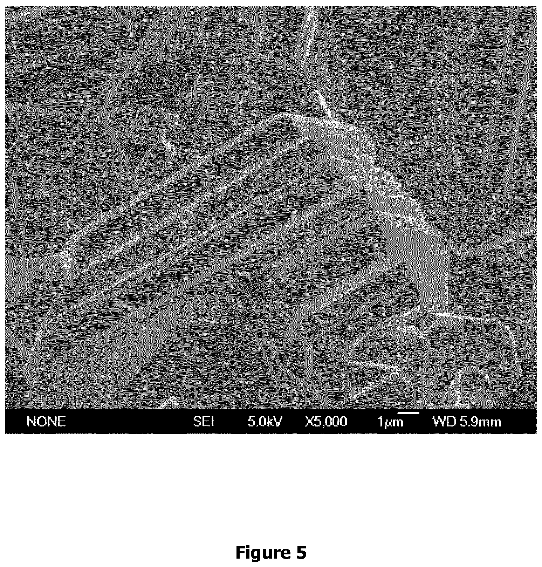

Figure 5 shows a scanning electron microscope (SEM) image of P2 phase with a thermal treatment for several days.

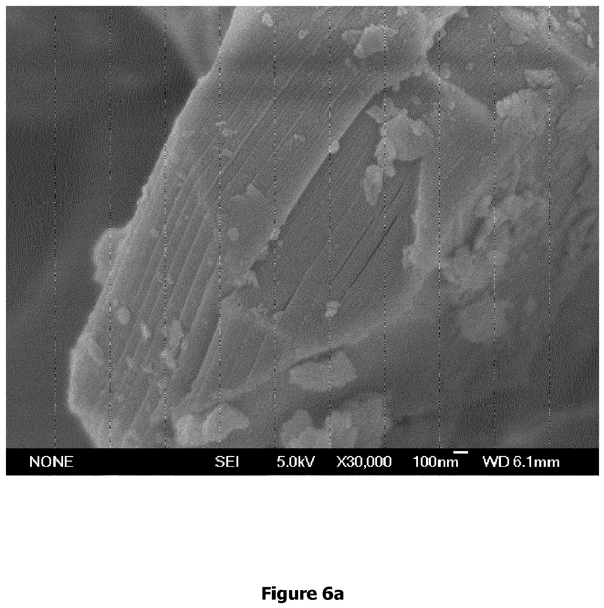

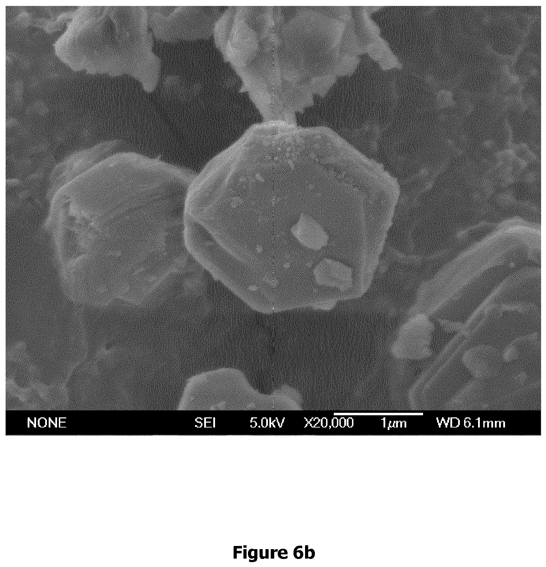

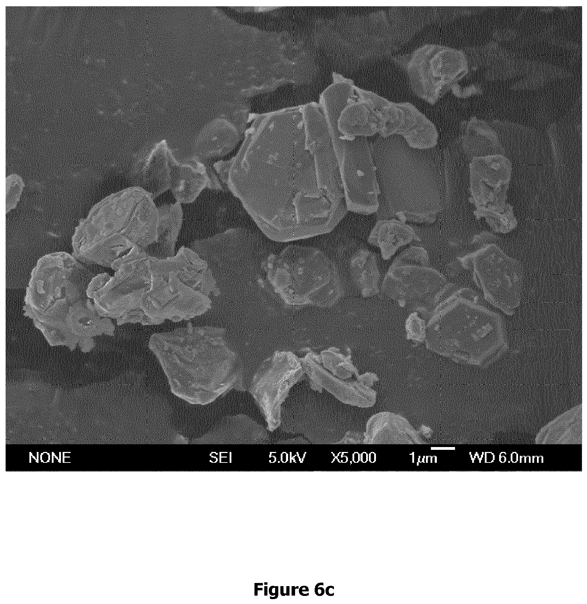

Figures 6-a, 6-b and 6-c show SEM images of O6 phase as obtained for Example (E1).

Detailed Description of the Invention

As described in NPL (Paulsen et al.), the classification system of structures of layered $A_xMO2$ bronzes into the groups is P2, O2, O6, P3, O3. In this classification system, the alkali metal A can be present in a prismatic or octahedral site, hence the letter "P" or "O", and the number refers to the number of $MO_2$ sheets (M being a transition metal) in the unit cell. $MO_2$ sheets in these structures are separated by the alkali metals.

The present invention relates to O6 structure type layered active materials. Crystal structure of positive electrode active materials of the present invention may appropriately be assessed using standard Faults software or DIFFAX software (DIFFaX, a computer program named as an acronym for Diffracted Intensities From Faulted Xtals), which computes diffraction from layered crystals that contain stacking faults. With more than 50% of computed defects not having O6 structure type, for example having O2-type defects, the structure type will no longer be defined as O6-type, with in particular an O2-type defect, but instead as another basic structure e.g. an O2 structure. Preferably, the computed level of defect, such as O2-type defect, in the O6 structure of positive electrode active materials of the present invention is 40% or less, more preferably 30% or less, furthermore preferably 20% or less, and most preferably 10% or less.

As set out above, the present invention provides a method of preparation of a lithium-rich mixed oxide positive electrode active material comprising steps of: (1) mixing a combination of oxygen-containing anion compounds of nickel, manganese, sodium and lithium, in a heating process in order to prepare a mixed oxide of sodium, lithium, nickel and manganese; and (2) carrying out an Na-Li ion exchange through application of a further lithium source to the mixed oxide of sodium, lithium, nickel and manganese prepared in step (1). This first step may provide a P2 structure material.

Preferred oxygen-containing anion compounds of nickel and manganese as sources in step (1) are oxides, such as in particular nickel oxide $NiO$ and manganese oxide $MnO_2$.

Preferred oxygen-containing anion compounds of sodium and lithium as sources in step (1) are carbonates and hydroxides, including mixtures of the two, which may be precipitated together. Carbonates are particularly preferred sources of both Na and Li in the framework of the present invention.

In most preferred methods therefore, in step (1), a combination of nickel oxide $NiO$ and manganese oxide $MnO_2$ are mixed with sodium carbonate $Na_2CO_3$ and lithium carbonate $Li_2CO_3$ and heating is carried out in order to prepare a mixed oxide of sodium, lithium, nickel and manganese. This first step may provide a P2 structure material.

In alternative possible methods for the synthesis of the P2 phase, a co-precipitation method can be used as summarized below:

- two solutions, one of $Ni(NO_3)_2 \cdot 6H_2O$ and one of $Mn(NO_3)_2 \cdot 4H_2O$, and another one of $Na_2CO_3$, may be simultaneously dropped into a recipient, such as a beaker, with an appropriate quantity of distilled water. This co-precipitation is preferably carried out using a syringe pusher;
- the precipitate formed in the co-precipitation step may then be appropriately washed with distilled water, for example 5 times, and then dried, for example at 80°C for two days. The dried powder thus obtained can be mixed with $Na_2CO_3$ and $Li_2CO_3$ in a glove box filled under argon to reach the required stoichiometry for a final $Na_x[Li_xNi_zMn_t]O_2$ composition. The mixture can then be calcined in air, for example at a temperature of around 900°C for about 12 hours. Finally, the material obtained may be quenched in air down to room temperature.

In the first part of this process to produce a P2 phase material, as well as nitrate, sulfate or hydroxide can be used in the first step. Co-precipitation methods of related species are also disclosed in Yabuuchi et al., JACS, 2011, 133, 4404-4419; and Kim et al., Journal of Power Sources, 203 (2012), 115-120.

The key feature of step (2) is to carry out ionic exchange with added lithium, in order to replace sodium ions in the mixed oxide prepared in step (1) with lithium ions. An O6 phase material can also be obtained from the P2 phase material prepared in the previous step. Ionic Na-Li exchange can be carried out using a lithium salt added in solution. Alternatively, in a particularly preferred embodiment, ion exchange in the solid phase, with a lithium source such as lithium chloride may be carried out. In a preferred procedure according to the present invention, in step (2), the mixed oxide obtained in step (1) is mixed with lithium chloride (LiCl) powder, followed by grinding, forming a pellet and heating under vacuum, in order to prepare a lithium-rich mixed oxide in the presence of lithium chloride and sodium chloride. The chlorides may appropriately be removed in a step (3) involving treating with a solvent.

Alternative methods for the synthesis of O6 phase from P2 phase include liquid or molten salt methods as described hereinbelow:

- Liquid method: In methanol, LiCl may be dissolved at a high concentration, for example 5M. The P2 phase material previously obtained may be added into the solution and stirred, preferably at room temperature, for example for a duration of about 1 day (24 hours is commonly appropriate);
- Molten salt method: the P2 intermediate may be mixed $LiNO_3$ and LiCl, preferably with a 88:12 (mol:mol) (88:12) mixture of $LiNO_3$:LiCl, notably with an Na:Li ratio equal to 1:10. Such a mixture may then be heated in air, appropriately at around 280°C, appropriately for 4 hours, preferably with $P < 10^{-2}$ mbar. The product of the reaction may appropriately be washed and filtered with methanol, and the resulting powder dried e.g. for a day at room temperature in a glove box.

For step (1), $NiO$ and $MnO_2$ from commercial sources may be used as starting materials. Increased reactivity and higher purity may however be observed for the use of nickel and manganese oxides prepared according to a particular protocol. Thus, in a preferred embodiment, the combination of nickel oxide $NiO$ and manganese oxide $MnO_2$ used in step (1) is prepared by a prior step of:

(0) preparing a mixture of nickel oxide NiO and manganese oxide $MnO_2$ by heating of a mixture of nickel and manganese nitrates at a temperature of 350°C to 550°C, preferably 400°C to 500°C.

<Positive Electrode for Lithium Ion Secondary Battery>

The positive electrode for a lithium ion secondary battery of the present invention contains the lithium-rich positive electrode active material of the present invention. An electrically conductive material and/or a binder may also be present.

Appropriate electrically conductive materials include: carbon black (such as acetylene black or Ketjen black), graphite, vapor-grown carbon fibers or carbon nanotubes.

Appropriate binders include: a fluorinated resin (such as polyvinylidene fluoride or polytetrafluoroethylene), a polyolefin (such as polyethylene or polypropylene), a polymer or copolymer having unsaturated bonds (such as a styrene/butadiene rubber, an isoprene rubber or a butadiene rubber) or an acrylic polymer or copolymer (such as an acrylic copolymer or a methacrylic copolymer).

A positive active material layer containing the lithium rich positive electrode active material of the present invention, and optional electrically conductive material(s) and/or binder(s) may be formed on a positive electrode current collector, such as an aluminum foil or a stainless steel foil, an aluminum alloy, or titanium. The positive electrode material layer may be formed on one surface or both surfaces of a sheet-form positive electrode current collector, the current collector appropriately having a thickness of at least 3 $\mu$m and at most 50 $\mu$m.

<Lithium Ion Secondary Battery with Non-aqueous Liquid Electrolyte>

In one embodiment, a lithium ion secondary battery of the present invention comprises a positive electrode as set out above, a negative electrode and a non-aqueous liquid electrolyte.

<Negative Electrode>

The negative electrode contains an anode active material, and may appropriately contain an electrically conductive material and/or a binder, and is appropriately formed on a negative electrode current collector.

The negative electrode may include a negative-electrode current collector, such as a metal foil, and a negative-electrode active material layer formed on the negative-electrode current collector. The negative-electrode current collector may be a metal foil that rarely forms an alloy with lithium in the electric potential range of the negative electrode or a film covered with such a metal, preferably copper.

The negative-electrode active material may be any material that can intercalate and deintercalate lithium ions. Examples of the negative-electrode active material include carbon materials, metals, alloys, metal oxides, metal nitrides, and carbon and silicon containing an alkali metal. Examples of the carbon materials include natural graphite, artificial graphite, and pitch-based carbon fibers. Examples of the metals and alloys include lithium (Li), silicon (Si), tin (Sn), germanium (Ge), indium (In), gallium (Ga), bismuth (Bi), lithium alloys, silicon alloys, and tin alloys. Examples of the metal oxides that can be used as negative-electrode active materials include titanium oxide and niobium oxide.

Examples of the binder include fluorinated polymers and rubber polymers as in the positive electrode. The binder is preferably a styrene-butadiene copolymer (SBR), which is a rubber polymer, or a modified product thereof. The binder may be used in combination with a thickener, such as carboxymethyl cellulose (CMC).

<Separator>

The separator is an ion-permeable and insulating porous film disposed between the positive electrode and the negative electrode and is appropriately used in a lithium ion secondary battery of the present invention comprising a non-aqueous liquid electrolyte. Examples of the porous film include microporous thin films, woven fabrics, and nonwoven fabrics. The material of the separator is preferably polyolefin, more specifically, polyethylene, polypropylene, and polyamide-imides.

<Shape of lithium ion secondary battery>

The shape of the lithium ion secondary battery may, for example, be a coin-shape, a sheet-form (film-form), a folded shape, a wound cylinder with bottom, or a button shape, and is suitably selected depending upon the intended use.

< Non-Aqueous Electrolyte>

The non-aqueous electrolyte contains a non-aqueous solvent and an electrolyte salt that can dissolve in the non-aqueous solvent. The non-aqueous electrolyte may be an electrolytic solution, which is a liquid non-aqueous electrolyte, or a solid electrolyte. The non-aqueous electrolyte is preferably an electrolytic solution in terms of Li ion diffusion.

The electrolyte salt is a lithium salt, which is generally used as a supporting salt in known non-aqueous electrolyte secondary batteries. Such a lithium salt may be $LiPF_6$, $LiBF_4$, $LiClO_4$, $LiAsF_6$, $LiCF_3SO_3$, $LiN(SO_2F)_2$, and $LiN(SO_2CF_3)_2$, or combinations thereof. The lithium salt concentration in the electrolyte is, for example, 0.5 to 2 mol/L.

The non-aqueous solvent may be chosen among the group consisting of: cyclic ester carbonates, cyclic carboxylic acid esters, cyclic ethers, chain carbonic acid esters, chain carboxylic acid esters, chain ethers, nitriles, and amides. More specifically, the cyclic ester carbonates include ethylene carbonate (EC) and propylene carbonate (PC). The cyclic carboxylic acid esters include γ-butyrolactone (GBL). The chain esters include ethyl methyl carbonate (EMC) and dimethyl carbonate (DMC).

Alternatively, the non-aqueous solvent may be a fluorine-containing organic solvent (at least one hydrogen atom of which is substituted with a fluorine atom), because the fluorine-containing organic solvent is resistant to decomposition even in the case of charging to a high electric potential of more than 4.5 V. Examples of the fluorine-containing organic solvent include fluorine-containing cyclic ester carbonates, fluorine-containing cyclic carboxylic acid esters, fluorine-containing cyclic ethers, fluorine-containing chain carbonic acid esters, fluorine-containing chain ethers, fluorine-containing nitriles, and fluorine-containing amides. More specifically, the fluorine-containing cyclic ester carbonates include fluoroethylene carbonate (FEC), difluoroethylene carbonate (DFEC), and trifluoro propylene carbonate. The fluorine-containing cyclic carboxylic acid esters include fluoro-γ-butyrolactone (FGBL). The fluorine-containing chain esters include fluoroethyl methyl carbonate (FEMC), difluoroethyl methyl carbonate (DFEMC), and fluorodimethyl carbonate (FDMC).

<All solid-state lithium battery>

In a further aspect, the present invention relates to an all-solid-state secondary lithium battery comprising the following elements:

- a positive electrode containing the positive electrode active material with O6-type structure according to the present invention;
- a solid electrolyte layer;
- a negative electrode,

wherein the solid electrolyte layer is positioned between the positive electrode and negative electrode.

In the basic structure of an exemplary and preferable all-solid-state battery, the following layers are arranged in order: positive electrode current collector, positive electrode, solid electrolyte, negative electrode, negative electrode current collector. Further layers may be present - for example, a buffer layer may also be interposed at the positive electrode /solid electrolyte interface in order to enhance lithium-ion transfer at the interface.

In the all-solid-state secondary lithium battery of the present invention, solid electrolyte may be added to the positive and negative electrodes as well as being present in the solid electrolyte layer. It may be noted here that solid electrolyte included in the positive electrode may be similar or different from the one included for negative electrode, and the solid electrolyte used as separator between positive and negative electrodes may be different from the ones included in the positive and negative electrodes.

Concerning the solid-state electrolyte, a certain number of oxide-based or sulfide-based materials are known. Oxide-based solid electrolyte materials for lithium all-solid-state batteries typically contain Li and O, and often also a transition metal and/or metal/metalloid from group 13/14 of the Periodic Table (e.g. Al, Si, Ge), and/or phosphorus. Known materials in this context include LiPON (for example, $Li_{2.9}PO_{3.3}N_{0.46}$), LiLaTiO, LiLaZrO (for example, $Li_7La_3Zr_2O_{12}$). Compounds which have a NASICON mold structure can also be mentioned e.g. the compound denoted by general formula $Li_{1+x}Al_xGe_{2-x}(PO_4)_3$ ($0 \leq x \leq 2$), or the compound denoted by general formula $Li_{1+x}Al_xTi_{2-x}(PO_4)_3$ ($0 \leq x \leq 2$). Another possibility is a lithium borosilicate.

Concerning sulfide-based electrolyte materials, known materials include ones containing Li, S, and possibly one or more of P, Si/Ge (also group 13 elements B, Al, Ga, In). Known possibilities include, for example, $Li_{10}GeP_2S_{12}$, $Li_2S-P_2S_5$ and $Li_2S-P_2S_5-LiI$, $Li_2S-P_2S_5-Li_2O$, $Li_2S-P_2S_5-Li_2O-LiI$, $Li_2S-SiS_2$ and $Li_2S-SiS_2-LiI$, $Li_2S-SiS_2-LiBr$, $Li_2S-SiS_2-LiCl$, $Li_2S-SiS_2-B_2S_3-LiI$, $Li_2S-SiS_2-P_2S_5-LiI$, $Li_2S-B_2S_3$, $Li_2S-P_2S_5-Z_mS_n$ (m and n being positive numbers, Z being Ge, Zn, or Ga), $Li_2S-GeS_2$ and $Li_2S-SiS_2-Li_3PO_4$, and $Li_2S-SiS_2-Li_xMO_y$ (where x and y are positive numbers, M is P, Si, Ge, B, aluminum, Ga, or In etc.) The description of the above "$Li_2S-P_2S_5$" refers to sulfide solid electrolyte materials which use the material composition containing $Li_2S$ and $P_2S_5$ in varying relative amounts, the same naming convention referring to other descriptions hereinabove.

In a preferred embodiment of an all-solid-state lithium battery, the negative electrode is Li metal. The Li metal may be in the form of Li foil or Li particles. The thickness of the negative electrode active material layer will generally be appropriately within the range of 0.1 μm to 500 μm.

As a positive electrode active material in an all-solid-state lithium battery according to the present invention, apart from the positive electrode active material with an O6-type structure according to the invention, a further compound may be used, such as $LiCr_{0.05}Ni_{0.50}Mn_{1.45}O_4$, $LiCrMnO_4$, $LiNi_{0.5}Mn_{1.5}O_4$, $LiFePO_4$, $LiMnPO_4$, $LiNiPO_4$, $LiNi_{0.3}Mn_{0.3}O_2$.

In an alternative embodiment, the positive electrode containing the positive electrode active material with an O6-type structure according to the invention, may also contain a cobalt-containing material such as $LiCoO_2$, $LiNi_{0.33}Mn_{0.33}Co_{0.33}O_2$, $LiNi_{0.85}Co_{0.15}Al_{0.05}O_2$, $LiNi_{0.8}Mn_{0.1}Co_{0.1}O_2$, $LiNi_{0.6}Mn_{0.2}Co_{0.2}O_2$ and $LiNi_{0.8}CO_{0.2}O_2$.

Furthermore, a positive active material layer may contain an electrically conductive agent from a viewpoint of improving the conductivity of a positive active material layer. As electrically conductive material, acetylene black, Ketjenblack, a carbon fiber, carbon nanotube (CNT), carbon nanofibers (CNF) etc. can be mentioned, for example. A positive active material may also contain a binding agent. As such a binding material (binding agent), fluorine-based binding materials, such as polyvinylidene fluoride (PVDF) and polytetrafluoroethylene (PTFE), etc. can be mentioned, for example. CMC, cellulose and similar biosourced binding agents can be used with water-based processes.

Although the thickness of a positive active material layer may change according to the kind of all-solid-state battery made, it is generally preferable that it is within the range of 0.1 μm to 500 μm.

Concerning solid electrolyte materials used for the negative electrode active material layer, and an electrically conductive agent, these may be the same as that for the solid electrolyte layer and positive active material layer mentioned above.

An all-solid-state battery of the present invention has at least the positive active material layer, solid electrolyte layer, and negative electrode active material layer which are mentioned above. It further usually has a positive current collector which collects a positive active material layer, and a negative pole collector which performs current collection of a negative electrode active material layer. As a material of a positive current collector, for example, SUS (stainless steel), aluminum, nickel, iron, titanium, carbon, etc. can be mentioned, and SUS is especially preferable. On the other hand as a material of a negative pole collector, SUS, copper, nickel, carbon, etc. can be mentioned, for example, and SUS is especially preferable. Concerning the thickness, form, etc. of a positive pole collector and a negative pole collector, the person skilled in the art may choose suitably according to the use of the all-solid-state battery, etc. The cell case used for a common all-solid-state battery can be used, for example, the cell case made from SUS, etc. can be mentioned. Unlike the situation for a non-aqueous fluid electrolyte lithium ion secondary battery, a separator is not of particular use in an all-solid-state battery.

The all-solid-state battery of the present disclosure can be considered as a chargeable and dischargeable all-solid-state battery in a room temperature environment. Although it may be a primary battery and may be a rechargeable battery, it is especially preferable that it is a rechargeable battery. Concerning the form of the all-solid-state battery, a coin type, a laminated type, cylindrical, a square shape, etc. can be mentioned, as examples.

Examples

In what follows, the materials prepared were:

Example 1 (E1) : $Li_x [Li_{1/6}Ni_{1/6}Mn_{4/6}]O_y$ (O6 phase)
Comparative Example 1 (CE1) : $Li_x[Li_{0.14}Ni_{0.14}Mn_{0.72}]O_2$ (O2 phase)
Comparative Example 2 (CE2) : $Li_x[Li_{0.14}Ni_{0.14}Mn_{0.72}]O_2$ (O3 phase)
Comparative Example 3 (CE3) : $Li_x [Li_{1/6}Ni_{1/6}Mn_{4/6}]O_y$ (O3 phase)

Example 1 (E1), and Comparative Example 1 (CE1) were synthesized following Steps 0 to 3 as indicated below, adapting the amounts to the different stoichiometry of materials. Additional Step 4 is needed in order to synthesize the materials of Comparative Example 2 (CE2) and Comparative Example 3 (CE3).

**Synthesis of materials**

*Step 0 : Preparation of precursors*

Synthesis of oxide precursor from nitrate:

$Ni(NO_3)_2$, $6H_2O \rightarrow NiO$ (s) + $2NO_2$ (g) + $1/2 O_2$ (g) + $6H_2O$ (g) $Mn(NO_3)_2$, $6H_2O \rightarrow MnO_2$ (s) + $2NO_2$ (g) + $6H_2O$ (g)

A heat treatment of 450°C under $O_2$ atmosphere for 15 h was applied.

Sodium carbonate $Na_2CO_3$ and lithium carbonate $Li_2CO_3$ are dried overnight under vacuum at 200°C for 15 h.

All materials were stored in an Ar filled glove box to avoid any air contamination. All the following steps were carried out in an inert atmosphere for similar reasons.

*Step 1 : Synthesis of P2 phase as for Example (E1)*

Previously prepared oxide materials were added to dried carbonates in a grinding step which is advantageous in order to obtain well-mixed precursor powders with a random and homogenous distribution. Then, the mixed powder was placed in gold crucible for a heat treatment at 850°C under $O_2$ atmosphere for a time between 15 h and several days. More preferably, thermal treatment of several days gives an improved particle size for the following steps.

It may be noted that a small additional amount (from 3%wt to 5%wt) of Li and Na carbonates is appropriately used in order to balance the alkaline evaporation during thermal treatment.

The synthesis follows the following chemical reaction:

$$x \, Na_2CO_3 + y \, Li_2CO_3 + 2z \, NiO + 2t \, MnO_2 \rightarrow 2 \, P2 \text{-} Na_x[Li_y Ni_z Mn_t]O_2 + (x + y) \, CO_2(g)$$

Although oxygen is not consumed in the above reaction, it is appropriate to carry out the reaction under a flow of oxygen.

An appropriate ratio of the mass of $Na_2CO_3$ used in the above reaction to the mass of $Li_2CO_3$ is between 6 and 8, most preferably around 7 (i.e. the mass of $Na_2CO_3$ is around 7 times that of $Li_2CO_3$).

In particularly preferred embodiments, z may be from at least 0.15 to at most 0.17 and t from at least 0.66 to at most 0.69.

*Step 2 : Solid state ionic Na-Li exchange*

Previously prepared P2 phase was mixed with LiCl powder, with a small excess of LiCl of about 1.2 to 5 molar equivalents, most preferably 1.5 molar equivalents of LiCl for 1 mole of P2-$Na_{5/6}[Li_{1/6}Ni_{1/6}Mn_{4/6}]O_2$. Then, a grinding step was applied in order to obtain all precursor powders in a random and homogenous distribution. A uniaxial pressure of 2 to 7 tons is applied in order to form a compact pellet with the ground mixture. The pellet is then placed in an alumina crucible for a heat treatment under vacuum atmosphere (residual pressure $1 \times 10^{-2}$ mbar) at a temperature between 200°C and 400°C, most preferably at 300°C, and for a time between 2 h to 15 h, most preferably 4 h. The reaction is summarized with the following chemical reaction:

$$P2 \text{-} Na_x[Li_y Ni_z Mn_t]O_2 + (x + \varepsilon) \, LiCl \rightarrow Li_x[Li_{1/6}Ni_{1/6}Mn_{4/6}]O_y + \varepsilon \, LiCl + x \, NaCl$$

*Step 3 : Washing step for removing the remaining salts LiCl and NaCl*

As a last step, a washing process is carried out in order to remove remaining LiCl and NaCl salts. In order to proceed with this washing step, the heated pellet is well ground and then placed in a solvent able to dissolve and remove remaining salts. In an appropriate embodiment, most preferably anhydrous methanol is used. This step is repeated from 2 to 5 times most preferably 3 times.

*Step 4: 03 type active material synthesis from 02 or 06 type material as precursor*

Starting from previously obtained material an additional thermal treatment is applied for 15 h in a gold sealed tube at 400°C for CE3 material and 450°C for CE2 material.

**Characterization of materials**

XRD measurements

Laboratory powder X-Ray Diffraction (PXRD) patterns for E1, CE1, CE2 and CE3 were recorded on an Xpert3 diffractometer with an Xcelerator detector using a Cu $K\alpha_1$-$K\alpha_2$ source ($\lambda$ = 1.5418 Å) in the $2\theta$-range 10°-80° with a 0.016° step size over 3 hours. The samples were loaded in a glovebox in a Ø 3 mm diameter borosilicate glass capillary sealed under argon. Synchrotron powder X-Ray Diffraction (SXRD) pattern for E1 was recorded at CRISTAL beamline at Soleil Synchrotron (France) using a wavelength $\lambda = 0.5130$ Å and a MYTHEN detector. The pattern was recorded in the $2\theta$-range $0°$-$65°$ with a $0.004°$ step size over 1 minute. The sample was also loaded in a glovebox in a $\varnothing$ 3 mm diameter borosilicate glass capillary sealed under argon.

Simulation of XRD diagrams

The FAULTS program (http://www.cicenergigune.com/faults) was used to simulate the SXRD pattern of the E1 sample. In this compound, it is proposed that the oxygen packing is not a perfect succession of ABCBCABABCACAB... layers (giving rise to the O6-type structure). Stacking defects occur periodically to locally give rise to the O2-type structure over a couple of layers. This latter structure type is usually obtained after the ion exchange from a sodium phase with the P2-type structure to a lithium phase. In order to test the proposition of O2-type stacking defects in the O6-type structure, a FAULTS program was used. It was found that a probably of having 10 % of O2-type defects was a good approximation as the Figure 2 shows a good agreement between the experimental SXRD pattern and the simulated one.

ICP-OES measurments

The chemical analysis of the Na, Li, Ni and Mn contents was performed by inductively coupled plasma-optical emission spectroscopy (ICP-OES) using a Varian Model 720-ES spectrometer, after a complete dissolution of the powders into a concentrated aqua regia ($HCl/HNO_3$) solution and then diluted with distilled water.

Electrochemical performances

The positive electrode was a mixture containing 88 wt. % of the active material, 10 wt. % of graphite-carbon black (50-50) mixture as electronic conductor and 2 wt. % of polytetrafluoroethylene (PTFE) as binder. The electrolyte was 1 M $LiPF_6$ in mixture of propylene carbonate (PC), ethylene carbonate (EC) and di-methylene carbonate (DMC) with an equal 33%vol ratio. The electrochemical properties of the material were evaluated in CR2032-type coin cells. The assembled cells were cycled in galvanostatic mode using VMP-3 (Biologic) at a C/20 current rate in a range between [2.6V-4.6 V] and [2.5V-4.8V]. All the cell voltages are given vs $Li^+/Li$ redox couple.

Table 1 : Cell parameters obtained from refinements performed using Le Bail method in FullProf program and formula obtained by ICP-OES measurements

|  | ICP-OES deduced formulas | Space group | a (Å) | b (Å) | c (Å) | β (°) |
|---|---|---|---|---|---|---|
| E1 | $Li_{0.86}[Li_{0.16}Ni_{0.16}Mn_{0.67}]O_2$ | C2/m | 4.93(3) | 8.52(2) | 9.81(3) | 100.2(4) |
| CE1 | $Li_{0.65}[L_{0.12}Ni_{0.13}Mn_{0.74}]O_2$ | P6_3/m | 4.92(3) |  | 9.64(4) |  |
| CE2 | $Li_{0.65}[L_{0.12}Ni_{0.14}Mn_{0.74}]O_2$ | C2/m | 4.98(3) | 8.56(4) | 5.05(3) | 109.6(4) |
| CE3 | --- | C/2m | 4.95(5) | 8.51(4) | 5.15(5) | 110.3(6) |

**Claims**

1.  Positive electrode active material with O6-type structure having the following formula (1):

$$Li_x [A_z B_w (Li_{1/6} Ni_{1/6} Mn_{4/6})_{1-z-w}]O_2 \qquad (1)$$

wherein

$1 \geq x > 0$, preferably $1 > x > 0.5$;
$z < 0.005$;
when present, A is at least one element chosen from the group consisting of: Mg, Ca, Sr, Sc, Y, La, Ti, Zr, Hf, V, Nb, Ta, Cr, Mo, W, Mn, Fe, Co, Zn and Al;
$w < 0.05$; and

when present, B is at least one element chosen from the group consisting of: Mg, Ca, Sr, Sc, Y, La, Ti, Zr, Hf, V, Nb, Ta, Cr, Mo, W, Mn, Fe, Zn, and Al.

2.  Positive electrode active material according to claim 1, wherein z = 0 and/or w = 0.

3.  Positive electrode active material according to claim 2, wherein the material shows the monoclinic C2/m (12) space group, with the following cell parameters :

$$a = 4.93 \text{ Å}, b = 8.52 \text{ Å}, c = 9.81 \text{ Å}, \beta = 100.2°.$$

4.  Positive electrode active material according to any of claims 1 to 3 wherein the level of defect, such as O2-type defect, in the O6 structure of positive electrode active material is 40% or less, preferably 30% or less, more preferably 20% or less, and most preferably 10% or less.

5.  Method of preparation of a positive electrode active material according to any of claims 1 to 4 comprising at least the following steps:

    (1) mixing a combination of oxygen-containing anion compounds of nickel, manganese, sodium and lithium, in a heating process in order to prepare a mixed oxide of sodium, lithium, nickel and manganese;
    (2) carrying out Na-Li ion exchange through application of a further lithium source to the mixed oxide of sodium, lithium, nickel and manganese prepared in step (1).

6.  Method of preparation of a positive electrode active material according to claim 5, wherein the oxygen-containing anion compounds of nickel, manganese, sodium and lithium comprise oxides, hydroxides and/or carbonates.

7.  Method of preparation of a positive electrode active material according to claim 6, wherein:

    - the sources of the oxygen-containing anion compounds of nickel and/or manganese are oxides; and/or
    - the sources of the oxygen-containing anion compounds of sodium and lithium are carbonates and/or hydroxides.

8.  Method of preparation of a positive electrode active material according to any of claims 5 to 7 comprising:

    in step (1), mixing a combination of nickel oxide NiO and manganese oxide $MnO_2$ with sodium carbonate $Na_2CO_3$ and lithium carbonate $Li_2CO_3$ and heating at a temperature of 700°C to 1000°C, preferably 800°C to 900°C, for between 10 hours and 10 days, in order to prepare a mixed oxide of sodium, lithium, nickel and manganese; in step (2), combining the mixed oxide of sodium, lithium, nickel and manganese prepared in step (1) with lithium chloride (LiCl) powder, grinding, forming a pellet and heating under vacuum at a temperature of at least 200°C and at most 400°C for at least 2 hours and at most 15 hours, in order to carry out solid state ionic Na-Li exchange and prepare a lithium-rich mixed oxide in the presence of lithium chloride and sodium chloride.

9.  Method of preparation of a positive electrode active material according to any of claims 5 to 8, further comprising: a step (3) of treating the lithium-rich mixed oxide in the presence of lithium chloride and sodium chloride obtained in step (2) with a solvent to remove remaining lithium chloride and sodium chloride salts, in order to obtain a lithium-rich mixed oxide positive electrode active material.

10. Method of preparation of a positive electrode active material according to any of claims 5 to 9, wherein a combination of nickel oxide NiO and manganese oxide $MnO_2$ is used in step (1) and is prepared by: a prior step (0) of preparing a mixture of nickel oxide NiO and manganese oxide $MnO_2$ by heating of a mixture of nickel and manganese nitrates at a temperature of 350°C to 550°C, preferably 400°C to 500°C.

11. Positive electrode containing the positive electrode active material according to any of claims 1 to 4 or obtained by the method of any claims 5 to 10, and optionally an electronically conductive material and/or a binder.

12. Positive electrode according to claim 11, further comprising at least one positive electrode active material selected from the group consisting of: $LiCr_{0.05}Ni_{0.50}Mn_{1.45}O_4$, $LiCrMnO_4$, $LiNi_{0.5}Mn_{1.5}O_4$, $LiFePO_4$, $LiMnPO_4$, $LiNiPO_4$, and $LiNi_{0.5}Mn_{0.5}O_2$.

**13.** Positive electrode according to claim 11 or 12, further comprising at least one positive electrode active material selected from the group consisting of: $LiCoO_2$, $LiNi_{0.33}Mn_{0.33}Co_{0.33}O_2$, $LiNi_{0.85}Co_{0.15}Al_{0.05}O_2$, $LiNi_{0.8}Mn_{0.1}Co_{0.1}O_2$, $LiNi_{0.6}Mn_{0.2}Co_{0.2}O_2$ and $LiNi_{0.8}Co_{0.2}O_2$.

**14.** A lithium ion secondary battery comprising:

- the positive electrode according to any of claims 11 to 13;
- a negative electrode; and
- a non-aqueous liquid electrolyte,

wherein the non-aqueous liquid electrolyte is positioned between the positive electrode and negative electrode.

**15.** An all-solid-state secondary lithium battery comprising the following elements:

- a positive electrode according to any of claims 11 to 13;
- a solid electrolyte layer;
- a negative electrode,

wherein the solid electrolyte layer is positioned between the positive electrode and negative electrode.

**Amended claims in accordance with Rule 137(2) EPC.**

**1.** Positive electrode active material with O6-type structure having the following formula (1):

$$Li_x [A_zB_w(Li_{1/6}Ni_{1/6}Mn_{4/6})_{1-z-w}]O_2 \qquad (1)$$

wherein

$1 \geq x > 0$, preferably $1 > x > 0.5$;
$z < 0.005$;
when present, A is at least one element chosen from the group consisting of: Mg, Ca, Sr, Sc, Y, La, Ti, Zr, Hf, V, Nb, Ta, Cr, Mo, W, Fe, Co, Zn and Al;
$w < 0.05$; and
when present, B is at least one element chosen from the group consisting of: Mg, Ca, Sr, Sc, Y, La, Ti, Zr, Hf, V, Nb, Ta, Cr, Mo, W, Fe, Zn, and Al.

**2.** Positive electrode active material according to claim 1, wherein z = 0 and/or w = 0.

**3.** Positive electrode active material according to claim 2, wherein the material has the formula $Li_{0.86}[Li_{0.16}Ni_{0.16}Mn_{0.67}]O_2$ and shows the monoclinic C2/m (12) space group, with the following cell parameters : a = 4.93 A, b = 8.52 A, c = 9.81 A, $\beta$ =100.2°.

**4.** Positive electrode active material according to any of claims 1 to 3 wherein the level of defect, such as O2-type defect, in the O6 structure of positive electrode active material is 40% or less, preferably 30% or less, more preferably 20% or less, and most preferably 10% or less.

**5.** Method of preparation of a positive electrode active material according to any of claims 1 to 4 comprising at least the following steps:

(1) mixing a combination of oxides of nickel and manganese, and carbonates and/or hydroxides of sodium and lithium, in a heating process in order to prepare a mixed oxide of sodium, lithium, nickel and manganese;
(2) carrying out Na-Li ion exchange through application of a further lithium source to the mixed oxide of sodium, lithium, nickel and manganese prepared in step (1).

**6.** Method of preparation of a positive electrode active material according to claim 5 comprising:

in step (1), mixing a combination of nickel oxide NiO and manganese oxide $MnO_2$ with sodium carbonate $Na_2CO_3$

and lithium carbonate $Li_2CO_3$ and heating at a temperature of 700°C to 1000°C, preferably 800°C to 900°C, for between 10 hours and 10 days, in order to prepare a mixed oxide of sodium, lithium, nickel and manganese; in step (2), combining the mixed oxide of sodium, lithium, nickel and manganese prepared in step (1) with lithium chloride powder, grinding, forming a pellet and heating under vacuum at a temperature of at least 200°C and at most 400°C for at least 2 hours and at most 15 hours, in order to carry out solid state ionic Na-Li exchange and prepare a lithium-rich mixed oxide in the presence of lithium chloride and sodium chloride.

7. Method of preparation of a positive electrode active material according to either of claims 5 or 6, further comprising: a step (3) of treating the lithium-rich mixed oxide in the presence of lithium chloride and sodium chloride obtained in step (2) with a solvent to remove remaining lithium chloride and sodium chloride salts, in order to obtain a lithium-rich mixed oxide positive electrode active material.

8. Method of preparation of a positive electrode active material according to any of claims 5 to 7, wherein a combination of nickel oxide NiO and manganese oxide $MnO_2$ is used in step (1) and is prepared by: a prior step (0) of preparing a mixture of nickel oxide NiO and manganese oxide $MnO_2$ by heating of a mixture of nickel and manganese nitrates at a temperature of 350°C to 550°C, preferably 400°C to 500°C.

9. Positive electrode containing the positive electrode active material according to any of claims 1 to 4 or obtained by the method of any claims 5 to 8, and optionally an electronically conductive material and/or a binder.

10. Positive electrode according to claim 9, further comprising at least one positive electrode active material selected from the group consisting of: $LiCr_{0.05}Ni_{0.50}Mn_{1.45}O_4$, $LiCrMnO_4$, $LiNi_{0.5}Mn_{1.5}O_4$, $LiFePO_4$, $LiMnPO_4$, $LiNiPO_4$, and $LiNi_{0.5}Mn_{0.5}O_2$.

11. Positive electrode according to claim 9 or 10, further comprising at least one positive electrode active material selected from the group consisting of: $LiCoO_2$, $LiNi_{0.33}Mn_{0.33}Co_{0.33}O_2$, $LiNi_{0.85}Co_{0.15}Al_{0.05}O_2$, $LiNi_{0.8}Mn_{0.1}Co_{0.1}O_2$, $LiNi_{0.6}Mn_{0.2}Co_{0.2}O_2$ and $LiNi_{0.8}Co_{0.2}O_2$.

12. A lithium ion secondary battery comprising:

- the positive electrode according to any of claims 9 to 11;
- a negative electrode; and
- a non-aqueous liquid electrolyte,

wherein the non-aqueous liquid electrolyte is positioned between the positive electrode and negative electrode.

13. An all-solid-state secondary lithium battery comprising the following elements:

- a positive electrode according to any of claims 9 to 11;
- a solid electrolyte layer;
- a negative electrode,

wherein the solid electrolyte layer is positioned between the positive electrode and negative electrode.

**Figure 1**

**Figure 2a**

**Figure 2b**

**Figure 3a-i**

**Figure 3a-ii**

**Figure 3a-iii**

**Figure 3a-iv**

**Figure 3b-i**

**Figure 3b-ii**

**Figure 3b-iii**

**Figure 3b-iv**

2 nm

**Figure 4**

Figure 5

**Figure 6a**

NONE       SEI    5.0kV   X20,000   1μm    WD 6.1mm

**Figure 6b**

NONE                    SEI     5.0kV    X5,000    1μm    WD 6.0mm

**Figure 6c**

Europäisches
Patentamt

European
Patent Office

Office européen
des brevets

# EUROPEAN SEARCH REPORT

Application Number

EP 22 30 5417

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2014 186937 A (SANYO ELECTRIC CO) 2 October 2014 (2014-10-02) | 5,6 | INV. C01G53/00 H01M4/505 |
| A | * example 1 * | 1-4,7-15 | |
| X | AKIMOTO JUNJI ET AL: "Synthesis, crystal structure and electrochemical properties of Li0.55Co0.5Mn0.5O2 with the O6-type layered structure", SOLID STATE IONICS, vol. 263, 27 June 2014 (2014-06-27), pages 167-171, XP029035060, ISSN: 0167-2738, DOI: 10.1016/J.SSI.2014.06.004 | 5,6 | |
| A | * sections "synthesis","electrochemical properties","conclusions" * | 1-4,7-15 | |
| A,D | J. M. PAULSEN ET AL: "Layered T2-, O6-, O2-, and P2-Type A 2/3 [M‘ 2+ 1/3 M 4+ 2/3 ]O 2 Bronzes, A = Li, Na; M‘ = Ni, Mg; M = Mn, Ti", CHEMISTRY OF MATERIALS, vol. 12, no. 8, 1 August 2000 (2000-08-01), pages 2257-2267, XP055074527, ISSN: 0897-4756, DOI: 10.1021/cm990810d * the whole document * | 1-15 | |
| A,D | US 2016/056460 A1 (KAWADA HIROSHI [JP] ET AL) 25 February 2016 (2016-02-25) * paragraphs [0013] - [0015]; claims * | 1-15 | |
| A,D | WO 2020/218474 A1 (PANASONIC IP MAN CO LTD [JP]) 29 October 2020 (2020-10-29) * claim 1 * | 1-15 | |

TECHNICAL FIELDS SEARCHED (IPC)

C01G
H01M

The present search report has been drawn up for all claims

| Place of search | Date of completion of the search | Examiner |
|---|---|---|
| Munich | 16 September 2022 | Nobis, Barbara |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 30 5417

This annex lists the patent family members relating to the patent documents cited in the above-mentioned European search report.
The members are as contained in the European Patent Office EDP file on
The European Patent Office is in no way liable for these particulars which are merely given for the purpose of information.

16-09-2022

| Patent document cited in search report | | Publication date | Patent family member(s) | | Publication date |
|---|---|---|---|---|---|
| JP 2014186937 | A | 02-10-2014 | NONE | | |
| US 2016056460 | A1 | 25-02-2016 | CN 105051953 | A | 11-11-2015 |
| | | | JP 6138916 | B2 | 31-05-2017 |
| | | | JP WO2014155988 | A1 | 16-02-2017 |
| | | | US 2016056460 | A1 | 25-02-2016 |
| | | | WO 2014155988 | A1 | 02-10-2014 |
| WO 2020218474 | A1 | 29-10-2020 | CN 113597409 | A | 02-11-2021 |
| | | | EP 3960710 | A1 | 02-03-2022 |
| | | | JP WO2020218474 | A1 | 29-10-2020 |
| | | | US 2022216460 | A1 | 07-07-2022 |
| | | | WO 2020218474 | A1 | 29-10-2020 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 11038167 B2
- US 20210288320 A1
- JP 6316687 B
- EP 2720981 B1
- US 20160056460 A1
- US 9831489 B2
- WO 2020218474 A1

**Non-patent literature cited in the description**

- **PAULSEN et al.** *Chem. Mater.,* 2000, vol. 12, 2257-2267
- **TARASCON.** *J. Electrochem. Soc.,* 1987, vol. 134 (6), 1345-1351
- **YABUUCHI et al.** *JACS,* 2011, vol. 133, 4404-4419
- **KIM et al.** *Journal of Power Sources,* 2012, vol. 203, 115-120